# EUROPÄISCHE PATENTSCHRIFT

(11) **EP 3 225 088 B1**
(45) Veröffentlichungstag und Bekanntmachung des Hinweises auf die Patenterteilung: **22.04.2020**
(21) Anmeldenummer: 17401020.7
(22) Anmeldetag: 02.03.2017
(51) Int. Cl.: A01B 35/26

(54) **BODENBEARBEITUNGSWERKZEUG**
SOIL WORKING TOOL
OUTIL DE TRAITEMENT DE SOL

(30) Priorität: 08.03.2016 DE 102016104149
(43) Veröffentlichungstag der Anmeldung: 04.10.2017
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04657 Narsdorf (DE)

(56) Entgegenhaltungen:
- EP-A1- 3 114 915
- DE-A1-102013 102 420
- DE-U1- 29 722 411

## Beschreibung

Die Erfindung betrifft ein Bodenbearbeitungswerkzeug gemäß des Oberbegriffes des Patentanspruches 1, und wie bekannt aus DE 297 22 411 U1.

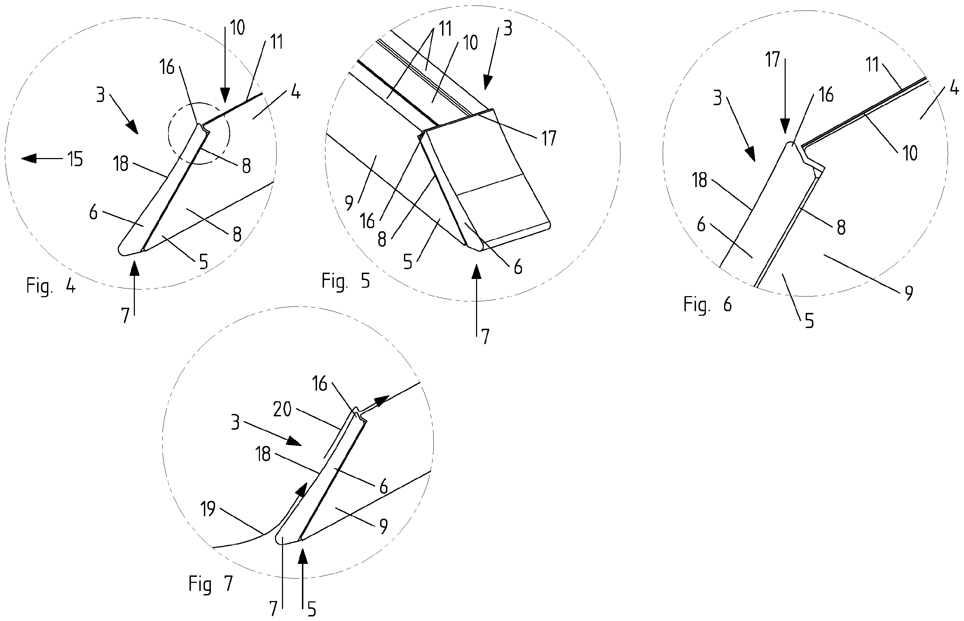

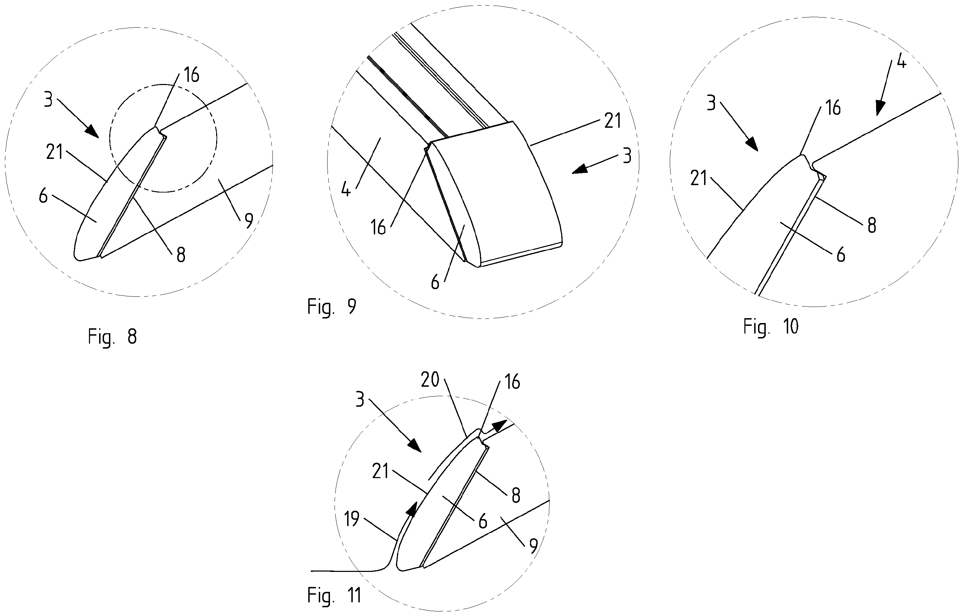

Ein derartiges Bodenbearbeitungswerkzeug ist in EP 2 445 329 B1 beschrieben. Bei diesen Bodenbearbeitungswerkzeug sind, wenn es als Grubberschar ausgebildet ist, an der Scharspitze ein oder mehrere Hartmetallelemente als Schneidelement unter Vermittlung von Lotmaterial angeordnet. Auf diese Weise wird ein sehr guter Verschleißschutz für die Zinkenspitze erreicht. Beim Grubberschar ist der weitere, sich der an die Zinkenspitze anschließende Boden führende Bodenführungsbereich des Grubberschares nicht durch Verschleißschutzelemente geschützt. In dem Ausführungsbeispiel gemäß den Figuren 7 und 8 ist in diesem Stand der Technik ein Pflugschar gezeigt, wobei einerseits der Schneidbereich durch mehrere Hartmetallplatten und das Leitblech durch in dieses eingearbeitete und beabstandet zueinander angeordnete Ausnehmungen eingesetzte Hartstoffabdeckungen geschützt. Diese Ausgestaltung ist sehr aufwändig und teuer. Für ein Grubberschar ist eine derartige Ausgestaltung nicht anwendbar.

Der Erfindung liegt die Aufgabe zu Grunde, mit einfachen und preiswerten Mitteln einen verbesserten Verschleißschutz für den sich an den zinkenartigen, den Boden aufbrechenden Bereich des Bodenbearbeitungswerkzeuges anschließenden Bodenführungsbereich zu schaffen.

Diese Aufgabe der erfindungsgemäß mit den kennzeichnenden Merkmalen des Patentanspruchs 1 gelöst.

Infolge dieser Maßnahme ist das hintere obere Ende des die Schneidkante des Bodenbearbeitungswerkzeuges bildenden Hartstoffelementes oder Hartstoffelemente erhöht gegenüber dem sich daran anschließenden Bereich angeordnet.

In überlappender überdachender Weise ist der nach hinten oben ragende Ansatz des Hartstoffelementes oder der Hartstoffelemente gegenüber der Führungsplatte ausgestaltet. Durch diese Ausgestaltung ist der sich in Fahrtrichtung an das hintere Ende des Hartstoffelementes oder der Hartstoffelemente anschließende Beginn der Führungsplatte quasi im Schatten des Ansatzes des Hartstoffelementes oder der Hartstoffelemente in geschützter Weise angeordnet. Hierdurch wird eine wesentlich höhere Standzeit des Bodenbearbeitungswerkzeuges erreicht, da der Übergang zwischen dem Ende des Hartstoffelementes oder der Hartstoffelemente nicht durch den über das Bodenbearbeitungswerkzeug hinweg fließenden Bodenstrom ausgewaschen wird. Diese erfindungsgemäße Ausgestaltung wirkt quasi als Sprungschanze für den über den unteren Bereich des Bodenbearbeitungswerkzeuges im Bereich des Hartstoffelementes oder der Hartstoffelemente hinweg fließenden Bodenstrom.

Eine Verbesserung hinsichtlich der Standzeit des Bodenbearbeitungswerkzeuges lässt sich noch dadurch erreichen, dass sich unmittelbar an das Hartstoffelement oder die Hartstoffelemente anschließend mittels Laserschweißung als verschleißfestes Material als Verschleißschutzschicht auf den sich an den zinkenartigen Bereich anschließenden Bodenführungsbereich zum Führen des Bodens als zumindest eine Verschleißschutzschicht aus zumindest einem verschleißfesten Material angebracht ist. Hierdurch wird in einfacher Weise ein besserer Verschleißschutz der Führungsplatte hinter dem sich an das Hartstoffelement oder die Hartstoffelemente anschließenden Bereich erreicht. Hierbei wird sich besonders vorteilhaft die erhöhte Anordnung des hinteren Endes des Hartstoffelementes oder der Hartstoffelemente aus, weil der Anfangsbereich des aufgebrachten Verschleißschutzes auf die Führungsplatte in den vorbeschriebenen Schatten liegt.

Durch die erhöhte Ausgestaltung des Endes des Hartstoffelementes oder der Hartstoffelemente gegenüber den sich an das Hartstoffelement oder die Hartstoffelemente anschließenden Bereich der Führungsplatte in Fahrtrichtung gesehen wird eine Anordnung des Beginnes der Führungsplatte im Schatten der Hartstoffelementes oder der Hartstoffelemente erreicht. Somit ergibt sich wird ein dem Verschleiß nicht unterliegender Übergang in diesem Übergangsbereich.

Eine vorteilhafte Ausgestaltung der hinteren oberen Kante des Hartstoffelementes oder der Hartstoffelemente ergibt sich dadurch, dass die in Fahrtrichtung gesehen obere hintere quer zur Fahrtrichtung verlaufende Kante des Hartstoffelementes oder der Hartstoffelemente abgerundet ausgebildet ist.

In einer Ausführungsform ist für bestimmte Einsatzfälle vorgesehen, dass die obere Fläche des Hartstoffelementes oder der Hartstoffelemente auf ihrer oberen der Fahrtrichtung zugewandten Seite konkav ausgebildet sind.

In einer anderen Ausführungsform ist für andere bestimmte Einsatzfälle vorgesehen, dass die obere Fläche des Hartstoffelementes oder der Hartstoffelemente auf ihrer oberen der Fahrtrichtung zugewandten Seite konvex ausgebildet sind. Eine sehr hohe Standzeit des die Schneidkante bildenden Hartstoffelementes oder der Hartstoffelemente wird dadurch erreicht, dass das Hartstoffelement oder die Hartstoffelemente in seinem oder ihrer der Spitze zugewandten Bereich eine größere Dicke als an seinem oder ihrem oberen Ende aufweist.

Versuche haben gezeigt, dass sich wirtschaftliche und erfindungsgemäße Bodenbearbeitungswerkzeuge mit einer entsprechend langen Standzeit dadurch schaffen lassen, dass der in Fahrtrichtung gesehen hintere Teil des Hartstoffelementes oder der Hartstoffelemente in der Höhe über die sich daran anschließende, mit einem Verschleißschutzmaterial, versehene, vorzugsweise beschichtete Führungsplatte des Bodenbearbeitungswerkzeuges um ein Maß, welches zumindest ¼ seiner oder ihrer Dicke am oberen Ende entspricht, hinausragt.

Für schwierige Einsatzfälle für das erfindungsgemäße Bodenbearbeitungswerkzeug und der Anordnung des die Schneidkante eines Bodenbearbeitungswerkzeuges bildenden Hartstoffelementes oder der Hartstoffelemente ist vorgesehen, dass der in Fahrtrichtung gesehen hintere Teil des Hartstoffelementes oder der Hartstoffelemente mit seinem oder ihrem unteren Bereich über eine Höhe, die zumindest der Hälfte seiner oder ihrer Dicke entspricht, sich gegen das hintere Ende der Aussparung direkt oder unter Vermittlung von Lotmaterial abstützt.

Um einen reibungslosen Übergang zwischen dem Hartstoffelement oder den Hartstoffelement der und der sich anschließenden Führungsplatte unter Vermeidung von Auswaschungen in diesem Übergangsbereich ist vorgesehen, dass der in Fahrtrichtung gesehen hintere Teil des Hartstoffelementes oder der Hartstoffelemente in der Höhe über die sich daran anschließende Führungsplatte des Bodenbearbeitungswerkzeuges hinausragt und mittels eines in Fahrtrichtung gesehen nach hinten oben ragenden Ansatzes in Richtung der Führungsplatte in der Höhe die Führungsplatte fortsetzend überlappt.

Um einen ausreichend hohen Verschleißschutz der Führungsplatte zu gewährleisten ist vorgesehen, dass sich unmittelbar an das Hartstoffelement oder die Hartstoffelemente anschließend mittels Laserschweißung verschleißfestes Material als Verschleißschutzschicht auf den sich an den zinkenartigen Bereich anschließenden Bodenführungsbereich zum Führen des Bodens als zumindest eine Verschleißschutzschicht aus zumindest einem verschleißfesten Material aufgebracht ist.

Infolge dieser Maßnahme wird durch eine Laserschweißung verschleißfestes Material als Verschleißschutzschicht auf den sich an den zinkenartigen vorderen Bereich des Bodenbearbeitungswerkzeuges, insbesondere eines Grubberschares anschließenden Bodenführungsbereiches zumindest eine Verschleißschutzschicht in einfacher und relativ preiswerter Weise aufgebracht. Diese durch die Laserschweißung aufgebrachte Verschleißschutzschicht schützt diesen Bereich des Bodenbearbeitungswerkzeuges.

Um in einfacher Weise die Menge von verschleißfestem Material für die dem Verschleiß unterliegenden Bereiche an den auftretenden Verschleiß anpassen zu können, umso eine optimierte Aufbringung der Menge von verschleißfestem Material zu erreichen, ist vorgesehen, dass auf den sich an den zinkenartigen Bereich anschließenden Bereich auf dem Bodenführungsbereich des Bodenbearbeitungswerkzeuges eine erste Verschleißschutzschicht über die gesamte Breite des Bodenführungsbereich des Bodenbearbeitungswerkzeuges aufgebracht ist, und dass in dem ersten, vorderen Bodenführungsbereich des Bodenbearbeitungswerkzeuges auf die erste Verschleißschutzschicht jeweils in den seitlichen Randbereichen des Bodenführungsbereich des Bodenbearbeitungswerkzeuges jeweils ein streifenartiger Verschleißschutzstreifen mittels Laserschweißen als zweite Verschlussschutzschicht aufgebracht sind. Somit wird eine entsprechend angepasste Gesamtverschleißschutzschicht aufgebracht.

Hierbei ist besonders vorteilhaft, wenn die streifenartigen Verschleißschutzstreifen beabstandet zueinander angeordnet sind. Somit sind die streifenartigen Verschleißschutzstreifen nur auf die besonders einem starken Verschleiß unterliegenden Seitenbereiche des Grubberschares aufgebracht. Somit kann zwischen den beiden seitlichen streifenartigen Verschleißschutzstreifen für die zweite Verschleißschutzschicht ein Freiraum bleiben. Diese ist eine sehr ökonomische Materialaufbringung

Eine optimierte Aufbringung vom Verschleißmaterial, um einen verbesserten Verschleißschutzschicht erhalten, wird dadurch erreicht, dass die erste sich über die gesamte Breite des Bodenführungsbereich erstreckender Verschleißschutzschicht eine Länge von zumindest 150-250 mm, vorzugsweise 200 mm und die zweite als jeweiliger seitliche streifenartige Verschleißschutzstreifen ausgebildete Verschutzschicht jeweils eine Länge von zumindest 80-150 mm, vorzugsweise 100 mm aufweist.

Um einen ausreichenden Schutz für die Seitenbereiche des Bodenbearbeitungswerkzeuges im Bodenführungsbereich zu erhalten, ist vorgesehen, dass jeder seitliche Verschleißschutzstreifen etwa ¼ der Breite des bodenführenden Bereiches des Bodenbearbeitungswerkzeuges aufweist.

Ein ausreichender Verschleißschutzschicht für die am häufigsten in der Praxis anzutreffenden Einsatzbedingungen wird dadurch erreicht, dass die eine erste Verschleißschutzschicht eine Dicke von 0,1 - 3 mm, vorzugsweise etwa 0,5 mm und die zweite als seitliche streifenartige Verschleißschutzstreifen ausgebildete Verschutzschicht eine Dicke von 0,5 - 5 mm, vorzugsweise etwa 1 mm.

Weitere Einzelheiten der Erfindung sind der Beispielsbeschreibung und den Zeichnungen zu entnehmen. Die Zeichnungen zeigen
- Fig.1: das als Grubberschar ausgebildete erfindungsgemäße Bodenbearbeitungswerkzeug in perspektivischer Darstellung,
- Fig.2: das als Grubberschar ausgebildete erfindungsgemäße Bodenbearbeitungswerkzeug in Vorderansicht,
- Fig.3: das als Grubberschar ausgebildete erfindungsgemäße Bodenbearbeitungswerkzeug in Seitenansicht,
- Fig.4: die Scharspitze des Grubberschares nach den Fig.1 - 3, in Seitenansicht und vergrößertem Maßstab,
- Fig.5: die Scharspitze des Grubberschares in der Rückansicht von Fig.4 in perspektivischer Ansicht,
- Fig.6: die Scharspitze des Grubberschares ausschnittsweise nach Fig.4 in vergrößertem Maßstab,
- Fig.7: die Scharspitze des Grubberschares in der Darstellungsweise nach Fig.4 mit dem symbolisch durch Pfeile eingezeichneten Bodenfluss im Bereich der Scharspitze in Prinzipdarstellung,
- Fig.8: die Scharspitze des Grubberschares nach den Fig.1 - 3, jedoch mit einer anders geformten Hartmetallelement als Schneidelement, in Seitenansicht und vergrößertem Maßstab,
- Fig.9: die Scharspitze des Grubberschares in der Rückansicht von Fig.8 in perspektivischer Ansicht,
- Fig.10: die Scharspitze des Grubberschares ausschnittsweise nach Fig.8 in vergrößertem Maßstab und
- Fig.11: die Scharspitze des Grubberschares in der Darstellungsweise nach Fig.8 mit dem symbolisch durch Pfeile eingezeichneten Bodenfluss im Bereich der Scharspitze in Prinzipdarstellung.

Das als Grubberschar 1 ausgebildete Bodenbearbeitungswerkzeug für eine landwirtschaftliche Maschine ist mittels durch die in dem Bodenbearbeitungswerkzeug 1 angeordneten Durchbrüche 2 zu steckenden Befestigungsmittel, beispielsweise Schrauben in nicht dargestellter Weise an einem ebenfalls nicht dargestellten Werkzeughalter einer Bodenbearbeitungsmaschine, wie beispielsweise einem landwirtschaftlichen Grubber befestigt. Das Bodenbearbeitungswerkzeug 1 weist an seinem unteren Ende einen vorderen zinkenartigen Bereich 3 auf, an dem sich ein als leitblechartiges Element und/oder an den zinkenartigen Bereich anschließenden Bodenführungsbereich 4 zum Führen des Bodens, welches, wie im Ausführungsbeispiel dargestellt, in sich verbunden ausgestaltet ist, anschließt. Dieser Bodenführungsbereich 4 kann auch als Führungsplatte ausgebildet sein. Dieser Bodenführungsbereich 4 führt den von den zinkenartigen Bereich 3 aufgebrochenen Boden in gewünschter Weise nach oben, so dass eine Krümelung des Bodens stattfindet.

An der Zinkenspitze 5, die sich zu Beginn des zinkenartigen Bereiches 3 befindet, ist im Ausführungsbeispiel ein als Hartmetallplatte 6 ausgebildete Hartstoffelement, die beispielsweise aus Wolframcarbid stehen können, angeordnet. Die Hartmetallplatte 6 ist im Bereich der die Schneidkante 7 bildenden Bereich des zinkartigen Bereiches 3 angeordnet. In dem unteren vorderen Bereich der Zinkenspitze 5 des vorderen zinkenartigen Bereiches 3 des Werkzeuges 1 ist eine an die Größe und Form der Hartmetallplatten 6 angepasste Aussparung 8 in dem Trägerelement 9 angeordnet. Die Hartmetallplatte 6 ist unter Vermittlung von Lotmaterial in der Aussparung 8 auf dem Trägerelement 9 des Bodenbearbeitungswerkzeuges 1 befestigt Es ist auch möglich, dass mehrere schmalere Hartmetallplatten nebeneinander anstelle der einen Hartmetallplatten 6 hier angeordnet sind. Die Ausgestaltung und Anordnung der Hartmetallplatten 6 wird weiter unten genauer beschrieben.

Unmittelbar an das Hartstoffelement 6 anschließend ist mittels Laserschweißung, wie einem geeigneten Laserauftragsverfahren verschleißfestes Material als Verschleißschutzschicht 10 und 11 auf den sich an den zinkenartigen Bereich 3 anschließenden Bodenführungsbereich 4 zum Führen des Bodens verschleißfestes Material von zwei unmittelbar aneinander anschließenden und aufeinanderliegenden Verschleißschutzschichten 10 und 11 aus zumindest einem verschleißfesten Material aufgebracht.

Hierbei ist auf den sich an den zinkenartigen Bereich 3 anschließenden Bereich auf dem Bodenführungsbereich 4 des Bodenbearbeitungswerkzeuges 1 eine erste Verschleißschutzschicht 9 über die gesamte Breite 12 des Bodenführungsbereiches 4 des Bodenbearbeitungswerkzeuges 1 aufgebracht. Weiterhin sind in dem ersten, vorderen Bodenführungsbereich 13 des Bodenbearbeitungswerkzeuges 1 auf die erste Verschleißschutzschicht 10 jeweils in den seitlichen Randbereichen des Bodenführungsbereich 4 des Bodenbearbeitungswerkzeuges 1 jeweils ein streifenartiger Verschleißschutzstreifen 11 mittels Laserschweißen als zweite Verschlussschutzschicht aufgebracht sind.

Die als zweite Verschleißschutzschicht aufgebrachten streifenartigen Verschleißschutzstreifen 11 sind beabstandet zueinander angeordnet. Somit ist ein Freiraum oberhalb der ersten Verschleißschutzschicht 10 zwischen den beiden Verschleißschutzstreifen 11 zwischen den beiden als zweite Verschleißschutzschicht aufgebrachten streifenartigen Verschleißschutzstreifen 11 vorhanden. Jeder seitliche Verschleißschutzstreifen 11 weist etwa ¼ der Breite 12 des bodenführenden Bereiches des Bodenbearbeitungswerkzeuges 1 aufweist.

Die erste sich über die gesamte Breite 12 des Bodenführungsbereiches 4 erstreckende Verschleißschutzschicht weist eine Länge von zumindest 150-250 mm, vorzugsweise 200 mm und die zweite als jeweiliger seitliche streifenartige Verschleißschutzstreifen 11 ausgebildete Verschleißschutzschicht weist jeweils eine Länge von zumindest 80-150 mm, vorzugsweise 100 mm auf.

Die eine erste Verschleißschutzschicht 10 weist eine Dicke von 0,1 - 3 mm, vorzugsweise etwa 0,5 mm und die zweite als seitliche streifenartige Verschleißschutzstreifen 11 ausgebildete Verschleißschutzschicht weist eine Dicke von 0,5 - 5 mm, vorzugsweise etwa 1 mm auf.

Mittels der vorbeschriebenen Verschleißschutzschichten 10 und 11 wird mit einfach aufzubringenden Materialien ein wesentlich verbesserter Verschleißschutz für das Bodenbearbeitungswerkzeug 1, insbesondere Grubberschar erreicht. Der dem größten Verschleiß unterliegende zinkenartige Bereich 3 ist durch die Hartmetallplatte 6 geschützt, während in dessen Schatten durch eine wesentlich dünnere und preiswerter aufzubringende Verschleißschutzschicht 10 und 11 insgesamt ein optimierter Verschleißschutz für ein Bodenbearbeitungswerkzeug 1 erreicht wird.

Das als Hartmetallplatte 6 ausgebildete Hartstoffelement 6 ist so in der Aussparung 8 in dem Trägerelement 9 der Zinkenspitze 5 des als Grubberschar ausgebildeten Bodenbearbeitungswerkzeuges 1 eingesetzt, dass der in Fahrtrichtung 15 gesehen hintere Teil des Hartstoffelementes 6 in der Höhe über die sich daran anschließende Bodenführungsbereich ausgebildete Führungsplatte 4 des Bodenbearbeitungswerkzeuges 1 hinausragt, wie die Fig.4 - 7 zeigen. Die Hartmetallplatte 6 setzt sich mittels eines in Fahrtrichtung 15 gesehen nach hinten oben ragenden Ansatzes 16 in Richtung der Führungsplatte 4 fort.

Wie bereits zuvor erwähnt, ist sich unmittelbar an das Hartstoffelement 6 anschließend mittels Laserschweißung als verschleißfestes Material als Verschleißschutzschicht 10 und 11 auf den sich an den zinkenartigen Bereich 3 anschließenden Bodenführungsbereich 4 zum Führen des Bodens als zwei Verschleißschutzschichten 10 und 11 aus verschleißfesten Material aufgebracht.

Der sich an das Hartstoffelement 6 anschließende Bereich der Führungsplatte 4 befindet sich entgegen der Fahrtrichtung 15 gesehen im Schatten der Hartstoffelementes 6 mit dem Ansatz 16, wie die Zeichnungen der Fig.4 - 7 zeigen. Hierzu ragt der in Fahrtrichtung 15 gesehen hintere Teil des Hartstoffelementes 6, der von dem Ansatz 16 gebildet wird, in der Höhe über die sich daran anschließende, mit einem Verschleißschutzmaterial der Schichten 10 und 11, versehenene, beschichtete Führungsplatte 4 des Bodenbearbeitungswerkzeuges 1 um ein Maß, welches zumindest ¼ seiner oder ihrer Dicke am oberen Ende der Hartstoffplatte 6 entspricht, hinaus. Hierbei ragt der in Fahrtrichtung 15 gesehen hintere Teil, der von dem Ansatz 16 gebildet wird, des Hartstoffelementes 6 in der Höhe über die sich daran anschließende Führungsplatte 4 des Bodenbearbeitungswerkzeuges 1 hinaus. Somit überlappt in fortsetzender Weise der des eines in Fahrtrichtung 15 gesehen nach hinten oben ragenden Ansatz 16 in Richtung der Führungsplatte 4 in der Höhe die Führungsplatte 4, wie die Fig.4 - 7 zeigen. Der Ansatz 16 überragt quasi in der Höhe die Führungsplatte 4. Die in Fahrtrichtung 15 gesehen obere hintere quer zur Fahrtrichtung 15 verlaufende Kante 17 der Hartmetallplatte 6 ist abgerundet ausgebildet. Die Hartmetallplatte 6 weist in seinem der Spitze 7 zugewandten Bereich eine größere Dicke als an seinem oberen Ende auf.

Der in Fahrtrichtung 15 gesehen hintere Teil des Hartstoffelementes 6 stützt sich mit seinem unteren Bereich über eine Höhe, die zumindest der Hälfte seiner oder ihrer Dicke entspricht, gegen das hintere Ende der Aussparung 8 direkt oder unter Vermittlung von Lotmaterial ab.

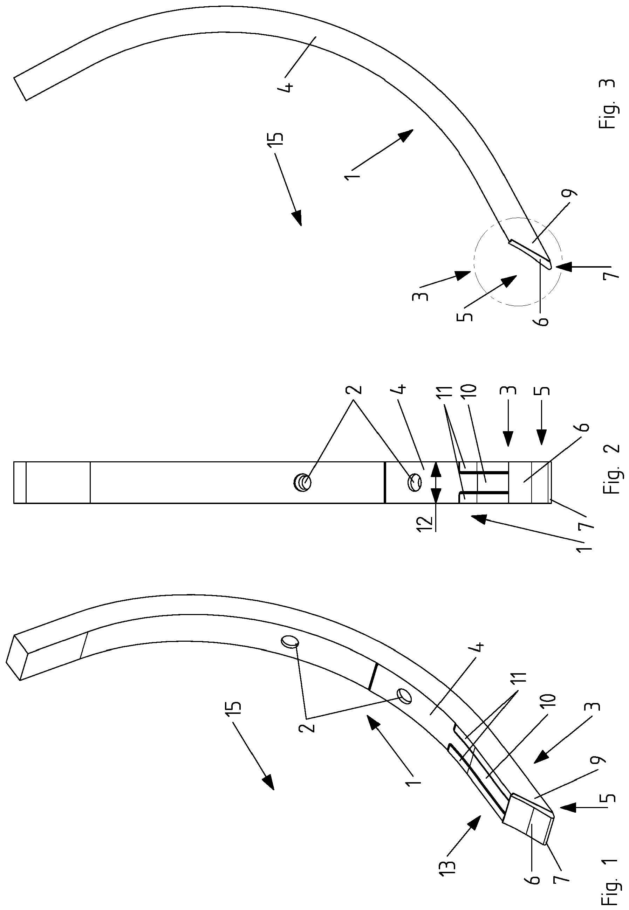

Bei dem Ausführungsbeispiel nach den Fig.1 - 7 ist die obere Fläche 18 des Hartstoffelementes 6 auf ihrer oberen der Fahrtrichtung 15 zugewandten Seite konkav ausgebildet.

Durch die Ausgestaltung des oberen Endes des als Hartstoffplatte 6 ausgebildeten Hartstoffelementes mit dem Ansatz 16 und deren Lage oberhalb der Verschleißschutzschichten 10 und 11 der Führungsplatte 4 mit den darauf angeordneten Verschleißschutzschichten 10 und 11 liegt die Führungsplatte 4 mit den darauf angeordneten Verschleißschutzschichten 10 und 11 im Schatten der Hartmetallplatte 6, hier des Ansatzes 16 der Hartmetallplatte 6, wie dies insbesondere die Fig. 4 -7 zeigen. Hierbei zeigt besonders Fig.7 durch die Einzeichnung des Bodenflusses, der durch die Pfeile 19 und 20 prinzipiell dargestellt wird, wie der Ansatz 16 der Hartmetallplatten 6 quasi als Sprungschanze für den Bodenfluss dient.

Die Ausgestaltung der Hartmetallplatte 6 gemäß den Fig.8 - 11 unterscheidet sich von der Ausgestaltung der Hartmetallplatte 6 nach den Fig.1 - 7 dadurch, die obere Fläche 21 des Hartstoffelementes 6 auf ihrer oberen der Fahrtrichtung 15 zugewandten Seite konvex ausgebildet ist.

## Patentansprüche

1. Bodenbearbeitungswerkzeug (1) für eine landwirtschaftliche Maschine, insbesondere Grubberschar, welches an einem Werkzeughalter befestigbar und am unteren Ende einen zinkenartigen Bereich (3) und einen sich daran anschließenden den von den zinkenartigen Bereich aufgebrochenen Boden führenden Bodenführungsbereich (4), der als bodenführende Führungsplatte ausgebildet ist, aufweist, wobei im Bereich der die Schneidkante (7) bildenden zinkenartigen Bereich (3) ein oder mehrere Hartstoffelemente (6) als Schneidelement unter Vermittlung von Lotmaterial angeordnet sind, wobei das Hartstoffelement (6) oder die Hartstoffelemente in einer Aussparung (8) im vorderen zinkenartigen Bereich (3) des Bodenbearbeitungswerkzeuges (1) angeordnet sind, **dadurch gekennzeichnet, dass** der in Fahrtrichtung (15) gesehen hintere Teil des Hartstoffelementes (6) oder der Hartstoffelemente in der Höhe über die sich daran anschließende und mit einem Verschleißschutzmaterial (10, 11) versehene Führungsplatte (4) des Bodenbearbeitungswerkzeuges (1) um ein Maß, welches zumindest 1/4 seiner oder ihrer Dicke am oberen Ende entspricht, hinausragt oder hinausragen und sich mittels eines in Fahrtrichtung (15) gesehen nach hinten oben ragenden und in überdachender Weise gegenüber der Führungsplatte ausgestalteten Ansatzes (16) in Richtung der Führungsplatte (4) fortsetzt oder fortsetzen, so dass das Hartstoffelement (6) oder die Hartstoffelemente (6) als Sprungschanze für über den unteren Bereich des Bodenbearbeitungswerkzeuges (1) fließenden Boden wirkt oder wirken.

2. Bodenbearbeitungswerkzeug nach Anspruch 1, **dadurch gekennzeichnet, dass** sich unmittelbar an das Hartstoffelement (6) oder die Hartstoffelemente anschließend mittels Laserschweißung als verschleißfestes Material als Verschleißschutzschicht (10, 11) auf den sich an den zinkenartigen Bereich anschließenden Bodenführungsbereich (4) zum Führen des Bodens als zumindest eine Verschleißschutzschicht (10, 11) aus zumindest einem verschleißfesten Material angebracht ist.

3. Bodenbearbeitungswerkzeug nach zumindest einem der vorstehenden Ansprüche, **dadurch gekennzeichnet, dass** der sich an das Hartstoffelement (6) oder die Hartstoffelemente anschließende Bereich der Führungsplatte (4) in Fahrtrichtung (15) gesehen im Schatten der Hartstoffelementes (6) oder der Hartstoffelemente befindet.

4. Bodenbearbeitungswerkzeug nach zumindest einem der vorstehenden Ansprüche, **dadurch gekennzeichnet, dass** die in Fahrtrichtung (15) gesehen obere hintere quer zur Fahrtrichtung (15) verlaufende Kante (16) des Hartstoffelementes (6) oder der Hartstoffelemente abgerundet ausgebildet ist.

5. Bodenbearbeitungswerkzeug nach zumindest einem der vorstehenden Ansprüche, **dadurch gekennzeichnet, dass** die obere Fläche (18) des Hartstoffelementes (6) oder der Hartstoffelemente auf ihrer oberen der Fahrtrichtung (15) zugewandten Seite konkav ausgebildet sind.

6. Bodenbearbeitungswerkzeug nach zumindest einem der vorstehenden Ansprüche 1-4, **dadurch gekennzeichnet, dass** die obere Fläche (21) des Hartstoffelementes (6) oder der Hartstoffelemente auf ihrer oberen der Fahrtrichtung (15) zugewandten Seite konvex ausgebildet sind.

7. Bodenbearbeitungswerkzeug nach zumindest einem der vorstehenden Ansprüche, **dadurch gekennzeichnet, dass** das Hartstoffelement (6) oder die Hartstoffelemente in seinem oder ihrer der Spitze (5) zugewandten Bereich eine größere Dicke als an seinem oder ihrem oberen Ende aufweist.

8. Bodenbearbeitungswerkzeug nach zumindest einem der vorstehenden Ansprüche, **dadurch gekennzeichnet, dass** die Führungsplatte (4) mit dem Verschleißschutzmaterial (10, 11) beschichtet ist.

9. Bodenbearbeitungswerkzeug nach zumindest einem der vorstehenden Ansprüche, **dadurch gekennzeichnet, dass** der in Fahrtrichtung (15) gesehen hintere Teil (16) des Hartstoffelementes (6) oder der Hartstoffelemente mit seinem oder ihrem unteren Bereich über eine Höhe, die zumindest der Hälfte seiner oder ihrer Dicke entspricht, sich gegen das hintere Ende der Aussparung (8) direkt oder unter Vermittlung von Lotmaterial abstützt.

10. Bodenbearbeitungswerkzeug nach zumindest einem der vorstehenden Ansprüche, **dadurch gekennzeichnet, dass** der in Fahrtrichtung (15) gesehen nach hinten oben ragende Ansatz (16) in Richtung der Führungsplatte (4) in der Höhe die Führungsplatte (4) fortsetzend überlappt.

## Claims

1. Soil working tool (1) for an agricultural machine, in particular cultivator blade, which can be fastened to a tool holder and, at a lower end, has a tine-like region (3) and a soil guide region (4) which adjoins the latter, guides the soil broken up by the tine-like region and is designed as a soil-guiding guide plate, wherein one or more rigid material elements (6) are arranged with the aid of solder material as a cutting element in the region of the tine-like region (3) forming the cutting edge (7), wherein the rigid material element (6) or the rigid material elements is or are arranged in a recess (8) in the front tine-like region (3) of the soil working tool (1), **characterized in that** the rear part of the rigid material element (6) or of the rigid material elements, as seen in the direction of travel (15), projects or project in height by an extent which corresponds to at least a quarter of its or their thickness at the upper end over the adjoining guide plate (4) of the soil working tool (1), said guide plate being provided with wear protection material (10, 11), and continues or continue in the direction of guide plate (4) by means of a lug (16) which protrudes upwards at the rear, as seen in the direction of travel (15), and is configured so as to form a roof over the guide plate, and therefore the rigid material element (6) or the rigid material elements (6) acts or act in the manner of a ski jump for soil flowing over the lower region of the soil working tool (1).

2. Soil working tool according to Claim 1, **characterized in that** at least one wear protection layer (10, 11) composed of at least one wear-resistant material is attached directly adjoining the rigid material element (6) or the rigid material elements by means of laser welding as a wear protection layer (10, 11) in the form of wear-resistant material on the soil guiding region (4) which adjoins the tine-like region and is intended for guiding the soil.

3. Soil working tool according to at least one of the preceding claims, **characterized in that** that region of the guide plate (4) which adjoins the rigid material element (6) or the rigid material elements is located, as seen in the direction of travel (15), in the shadow of the rigid material element (6) or of the rigid material elements.

4. Soil working tool according to at least one of the preceding claims, **characterized in that** that edge (16) of the rigid material element (6) or of the rigid material elements which is at the top and rear, as seen in the direction of travel (15), and runs transversely with respect to the direction of travel (15) is formed in a rounded manner.

5. Soil working tool according to at least one of the preceding claims, **characterized in that** the upper surface (18) of the rigid material element (6) or of the rigid material elements is formed concavely on its upper side facing the direction of travel (15) .

6. Soil working tool according to at least one of the preceding Claims 1-4, **characterized in that** the upper surface (21) of the rigid material element (6) or of the rigid material elements is formed convexly on its upper side facing the direction of travel (15).

7. Soil working tool according to at least one of the preceding claims, **characterized in that** the rigid material element (6) or the rigid material elements has or have a greater thickness in its or their region facing the tip (5) than at its or their upper end.

8. Soil working tool according to at least one of the preceding claims, **characterized in that** the guide plate (4) is coated with the wear protection material (10, 11).

9. Soil working tool according to at least one of the preceding claims, **characterized in that** the rear part (16), as seen in the direction of travel (15), of the rigid material element (6) or of the rigid material elements is supported with its or their lower region over a height which corresponds at least to half of its or their thickness against the rear end of the recess (8) directly or with the aid of solder material.

10. Soil working tool according to at least one of the preceding claims, **characterized in that** the lug (16) which protrudes rearwards at the top, as seen in the direction of travel (15), continuously overlaps the guide plate (4) in height in the direction of the guide plate (4).

## Revendications

1. Outil de travail de sol (1) destiné à une machine agricole, en particulier un soc cultivateur, qui peut être fixé à un porte-outil, qui comporte à l'extrémité inférieure une région (3) en forme de dent et une région de guidage de sol (4) adjacente à la région en forme de dent et guidant le sol défoncé par la région en forme de dent et qui est conçu comme une plaque de guidage du sol, au moins un élément (6) en matériau dur qui sert d'élément de coupe étant disposé au moyen d'un matériau de soudure au niveau de la région (3) en forme de dent formant le bord de coupe (7), l'au moins un élément (6) en matériau dur étant disposé dans un évidement (8) ménagé dans la région avant (3) en forme de dent de l'outil de travail de sol (1), **caractérisé en ce que** la partie arrière de l'au moins un élément (6) en matériau dur, par référence au sens de déplacement (15), fait saillie en hauteur, au-dessus de la plaque de guidage (4) adjacente, pourvue d'un matériau de protection contre l'usure (10, 11), de l'outil de travail de sol (1), sur une étendue qui correspond à au moins 1/4 de son épaisseur à l'extrémité supérieure, et se projette en direction de la plaque de guidage (4) au moyen d'un appendice (16) saillant vers le haut et vers l'arrière par référence au sens de déplacement (15) et conçu à recouvrement par rapport à la plaque de guidage de sorte que l'au moins un élément (6) en matériau dur agit comme un tremplin pour le sol s'écoulant sur la région inférieure de l'outil de travail de sol (1).

2. Outil de travail de sol selon la revendication 1, **caractérisé en ce qu'**au moins une couche de protection contre l'usure (10, 11) en au moins un matériau résistant à l'usure est appliquée sur la région de guidage de sol (4), destinée à guider le sol et se raccordant à la région en forme de dent, de manière directement adjacente à l'au moins un élément (6) en matériau dur par soudage au laser en tant que matériau résistant à l'usure servant de couche de protection contre l'usure (10, 11).

3. Outil de travail de sol selon l'une au moins des revendications précédentes, **caractérisé en ce que** la région de la plaque de guidage (4) qui est adjacente à l'au moins élément (6) en matériau dur est située, par référence au sens de déplacement (15), à l'ombre de l'au moins un élément (6) en matériau dur.

4. Outil de travail de sol selon l'une au moins des revendications précédentes, **caractérisé en ce que** le bord arrière supérieur (16), par référence au sens de déplacement (15), de l'élément (6) en matériau dur, lequel bord s'étend transversalement au sens de déplacement (15), est arrondi.

5. Outil de travail de sol selon l'une au moins des revendications précédentes, **caractérisé en ce que** la surface supérieure (18) de l'élément (6) en matériau dur est concave sur son côté supérieur orienté dans le sens de déplacement (15).

6. Outil de travail de sol selon l'une au moins des revendications précédentes 1 à 4, **caractérisé en ce que** la surface supérieure (21) de l'au moins élément (6) en matériau dur est convexe sur son côté supérieur orienté dans le sens de déplacement (15).

7. Outil de travail de sol selon l'une au moins des revendications précédentes, **caractérisé en ce que** l'au moins un élément (6) en matériau dur a une épaisseur plus importante dans sa région dirigée vers la pointe (5) qu'à son extrémité supérieure.

8. Outil de travail de sol selon l'une au moins des revendications précédentes, **caractérisé en ce que** la plaque de guidage (4) est revêtue du matériau de protection contre l'usure (10, 11).

9. Outil de travail de sol selon l'une au moins des revendications précédentes, **caractérisé en ce que** la partie arrière (16), par référence au sens de déplacement (15), de l'au moins élément (6) en matériau dur est en appui avec sa région inférieure contre l'extrémité arrière de l'évidement (8) directement ou au moyen d'un matériau de soudure sur une hauteur qui correspond au moins à la moitié de son épaisseur.

10. Outil de travail de sol selon l'une au moins des revendications précédentes, **caractérisé en ce que** l'appendice (16), saillant vers le haut et vers l'arrière par référence au sens de déplacement (15), chevauche de manière continue la plaque de guidage (4) en hauteur en direction de la plaque de guidage (4).
